# EUROPÄISCHE PATENTSCHRIFT

(11) **EP 2 205 882 B1**
(45) Veröffentlichungstag und Bekanntmachung des Hinweises auf die Patenterteilung: **30.05.2012**
(21) Anmeldenummer: 08845890.6
(22) Anmeldetag: 30.10.2008
(51) Int. Cl.: F16C 35/063, F16C 35/073

(54) **VERFAHREN ZUM FESTLEGEN EINES LAGERRINGS AN ODER IN EINEM BAUTEIL**
METHOD FOR FIXING A BEARING RING ON OR IN A COMPONENT
PROCÉDÉ POUR FIXER UNE BAGUE DE ROULEMENT SUR OU DANS UN ÉLÉMENT

(30) Priorität: 03.11.2007 DE 102007052574
(43) Veröffentlichungstag der Anmeldung: 14.07.2010
(73) Patentinhaber: AB SKF, 415 50 Göteborg (SE)
(72) Erfinder: MEYER, Wilhelm, 97453 Schonungen (DE); ZANG, Christian, 97334 Nordheim (DE)
(74) Vertreter: Kohl, Thomas
(86) Internationale Anmeldenummer: PCT/EP2008/009164
(87) Internationale Veröffentlichungsnummer: WO 2009/056311

(56) Entgegenhaltungen:
- EP-A- 1 553 311
- DE-A1-102005 028 317
- DE-U1- 9 111 191
- US-B1- 6 315 457

## Beschreibung

Die Erfindung betrifft ein Verfahren zum Festlegen eines Lagerrings an oder in einem Bauteil mittels einer Klebeverbindung.

In verschiedenen Fällen, z. B. beim Einsatz langer, gelagerter Wellen, sind bei der Montage von Wälzlagern die freie Positionierbarkeit und ein fester Sitz des Lagers auf dem zu lagernden Bauteil sehr wichtig. Natürlich spielen auch die wirtschaftlichen Aufwendungen zur Realisierung der Befestigung eine große Rolle.

Bekannt und üblich sind für die Festlegung zunächst mechanische Lösungen. Hier kommen Spannhülsen zum Einsatz, die über einen kegeligen Sitz eine kraftschlüssige Verbindung herstellen. Ferner sind Exzenterringe bekannt, mit denen ein fester Verbund zwischen Lager und zu lagerndem Bauteil hergestellt werden kann. Häufig werden auch Schraubverbindungen eingesetzt. Hierbei werden insbesondere Madenschrauben verwendet, die radial zur Welle in ein Verbindungsteil eingeschraubt werden, um das Lager auf dem insbesondere wellenförmigen Bauteil festzulegen.

Nachteilig bei der Befestigung mittels einer Spannhülse ist weiterhin, dass mindestens drei Bauteile zur Befestigung benötigt werden. Diese müssen eine relativ hohe Genauigkeit haben, was entsprechende Kosten verursacht. Neben dem Fertigungs-und Kostenaufwand bedeuteten mehrere Bauteile auch eine Anhäufung von Fertigungstoleranzen. Je nach Lage der Istmaße können sich diese ungünstig addieren.

Ein weiteres Problem bei der Montage einer Spannhülse besteht darin, dass der Querschnitt der Hülse aus Festigkeitsgründen so groß gewählt werden muss, dass mit Ausnahme von inkorporierten Spannhülsen (Spezialhülsen) die jeweils nächst größere Lagerkennzahl gewählt werden muss, um auf der anderen Seite den Lagerring nicht zu stark zu schwächen. Diese Tatsache schränkt den Konstruktionsspielraum ein. In diesem Zusammenhang ist auch der Umstand zu nennen, dass gegebenenfalls auch Aussparungen für Dichtungselemente (z.B. O-Ringe) vorgesehen werden müssen, die in Ausnehmungen platziert werden, die eine entsprechende Bauteilschwächung hervorrufen.

So erfordert beispielsweise die Änderung von einer Madenschraubenbefestigung hin zu einer Spannhülsenbefestigung auch eine Anpassung des Einbauraums. Gerade bei Leistungserhöhungen (z. B. bei höheren Drehzahlen) von Maschinen, die eine höhere Laufgenauigkeit erfordern, bedeutet dies, dass die Anwendung nicht mehr so kompakt konstruiert werden kann.

Ein spezielles Problem beim Einsatz von Spannhülsen besteht darin, dass sich die gewünschte Lage des Lagers bei der Montage über das Aufschieben nur schwer definieren lässt. Dies bedeutet in der Praxis, dass der Pressverband wiederholt aufgehoben werden muss, um eine neue Positionierung vornehmen zu können; alternativ müssen konstruktive Maßnahmen ergriffen werden, z. B. eine spezielle Montagevorrichtung geschaffen werden. Gerade die Positionierung des Festlagers erlaubt keine Abweichung von der vorgesehenen Position, da ansonsten die Lage der Welle zur Umgebungskonstruktion unter Umständen die Funktion einschränkt.

Beim Einsatz von Schraubverbindungen und Exzenterringen kommt es zu dem Problem, dass durch diese Befestigungsmöglichkeit eine Verkippung des Lagerrings zu einem wellenförmigen Bauteil auftreten kann. Das führt zu einer reduzierten Laufruhe bzw. Laufgenauigkeit.

Weiterhin besteht das Problem, dass die Befestigungsart je nach der Belastung nicht ausreichend sein kann, um Mikrobewegungen vollständig zu vermeiden. Oft ist in der Passfuge solcher Lager Passungsrost mit entsprechenden Folgeschäden zu beobachten. Wird die Befestigung indes zu stark verspannt, können die Befestigungsmittel (insbesondere die Madenschraube) beschädigt werden.

Hinsichtlich der Festigkeit der Befestigung des Lagerrings auf dem Bauteil ist negativ, dass die Übertragung von Axialkräften deutlich eingeschränkt sein kann. Vor allem beim Einsatz von Madenschrauben tritt durch ein zu starkes Anziehen der Schrauben auch eine Verformung des Lagerrings auf, was zu einem ungünstigen Laufverhalten und zu Verspannungen führt. Dies muss durch eine entsprechend große Lagerluft kompensiert werden. Eine erhöhte Lagerluft bringt jedoch wiederum Nachteile eines ungünstigen Traganteils im Lager mit sich. Ansonsten gilt, dass auch durch die Montage die radiale Lagerluft beeinflusst wird. Je nach Lagerart (z. B. insbesondere bei Rillenkugellagern) ist das Maß der Lagerluftreduzierung nur schwer zu kontrollieren. Das kann dazu führen, dass das Lager radial verspannt wird. Dies macht eine aufwändige Überwachung der Montage erforderlich bzw. ergibt eine Lagerung mit reduzierter Lebensdauer.

Nachteilig ist ferner folgendes: Die Madenschraube erreicht ihre Festigkeit durch das Eingraben in den Werkstoff des Bauteils (Welle), d. h. durch Formschluss. Da dies auf der Welle zu einem Aufwurf führt, wird die Demontage des Lagers erschwert.

Ein spezifisches Problem des Exzenterrings ist, dass eine feste Verbindung nur durch Verdrehen zweier Ringe zueinander erreicht werden kann. Dies bedeutet allerdings, dass bei schnellem Drehrichtungswechsel des Lagers ein Atmen der Passfuge auftreten und sich dadurch der Verband lösen kann.

Bekannt ist es auch, eine Klebeverbindung zur Befestigung eines Lagers an oder in einem Bauteil vorzusehen. Eine solche Lösung ist beispielsweise in der DE 22 03 664 A1 beschrieben. Der Klebstoff wird dabei unmittelbar bei der Montage in die Passfuge zwischen den zu verbindenden Teilen eingebracht. Dieses Verfahren hat den Nachteil, dass sich das Einbringen eines Klebstoffs in Montagelinien schwierig gestaltet bzw. die Prozesssicherheit - insbesondere hinsichtlich der Menge an zuzuführendem Klebstoff und hinsichtlich der Sauberkeit der Fügepartner - von den Gegebenheiten bei der Montage bzw. vom jeweiligen Montagearbeiter abhängt. Weitere Lösungen mit Einsatz eines Klebstoffs sind in der US 6 315 457 B, in der DE 10 2005 028 317 A1, in der EP 1 553 311 A und in der DE 91 11 191 U1 beschrieben.

Des weiteren besteht bei der vorbekannten Lösung der Nachteil, dass bei manueller Einbringung des Klebstoffs Umgebungsbauteile, wie z. B. Dichtungen, mit Klebstoff benetzt werden können. Hierdurch kann die Funktion derartiger Bauteil nachteilig beeinflusst werden.

Der Erfindung liegt daher die **Aufgabe** zugrunde, ein Verfahren zum Festlegen eines Lagerrings an oder in einem Bauteil mittels einer Klebeverbindung so fortzubilden, dass die genannten Nachteile vermieden werden. Es soll insbesondere in einfacher und kostengünstiger Weise eine saubere Klebeverbindung erzielt werden, die nur an der benötigen Stelle wirkt und die einen zuverlässigen Verbund zwischen Lagerring und Bauteil herstellt.

Die Lösung dieser Aufgabe durch die Erfindung ist dadurch gekennzeichnet, dass das Verfahren die Schritte aufweist:
a) Einbringen des Klebstoffs an oder in den Lagerring oder an oder in das Bauteil, wobei der Klebstoff noch keine adhäsive Eigenschaft aufweist, durch die Teilschritte:
   a') Einbringen einer ringförmigen Ausnehmung in den Lagerring oder in das Bauteil;
   a") Einsetzen eines aus Klebstoff bestehenden Festkörpers in die Ausnehmung, wobei der aus Klebstoff bestehende Festkörper eine hohlzylindrische Gestalt aufweist, die an einer Umfangsstelle einen Schlitz aufweist, vorzugsweise einen in axiale Richtung des hohlzylindrischen Körpers verlaufenden Schlitz, wobei das Einsetzen des Klebstoffs in die Ausnehmung nach Art einer Schnappverbindung erfolgt;
b) Fügen des Lagerrings und des Bauteils in die gewünschte Relativposition;
c) Aktivieren des Klebstoffs derart, dass er einen adhäsiven Verbund zwischen dem Lagerring und dem Bauteil eingeht.

Unter Adhäsion wird vorliegend die Haftung zwischen dem Klebstoff und der Oberfläche des Lagerrings bzw. des Bauteils verstanden.

Das Fügen der Teile erfolgt also in einem Status des Klebstoffs, in der dieser noch nicht "klebt". Erst nach dem Erreichen der genauen Relativposition zwischen den zu verbindenden Bauteilen wird der Klebstoff "aktiviert", so dass der Klebeverbund hergestellt wird.

Die Aktivierung des Klebstoffs gemäß obigem Schritt c) kann durch Erwärmung erfolgen, insbesondere durch Induktion.

Möglich ist es auch, dass die Aktivierung des Klebstoffs durch Beaufschlagung mit Ultraschall erfolgt.

Weiterhin sieht eine bevorzugte Ausführungsform der Erfindung vor, dass die Aktivierung des Klebstoffs durch Zuführung einer zweiten Kleberkomponente erfolgt, die mit dem Klebstoff reagiert.

Der Fluss des Klebstoffs kann nach seiner Aktivierung in axiale Richtung zwischen Lagerring und Bauteil durch mindestens ein Barriereelement begrenzt werden. Als Barriereelement kommt einmal mindestens ein Dichtungsring in Frage, der bevorzugt als O-Ring ausgebildet ist. Andererseits kann es sich dabei auch um einen Kalibrierring handeln. Das Barriereelement ist dabei bevorzugt in einer Ringnut im Lagerring oder im Bauteil angeordnet.

Der Lagerring ist bevorzugt der Innenring eines Wälzlagers und das Bauteil dann eine Welle. Es ist aber auch genauso möglich, dass der Lagerring der Außenring eines Wälzlagers und das Bauteil ein Gehäuse ist.

Die vorgeschlagene Verfahrensweise bietet den Vorteil, dass unterschiedliche Werkstoffe mit unterschiedlichen (Material-)Kennwerten problemlos miteinander verbunden werden können.

Weiterhin wird die Betriebssicherheit erhöht, da ein Lösen der Verbindung zwischen Lagering und Bauteil (insbesondere zwischen dem Lagerinnenring und einer Welle) ausgeschlossen werden kann.

Auch wird die Lagergenauigkeit (Schiefstellung) des Lagerrings relativ zum Bauteil durch die Klebung verbessert.

Mit der vorgeschlagenen Lösung kann auch erreicht werden, dass in einfacher Weise die Maßgenauigkeit und die Oberflächengüte des Verbundes verbessert werden kann, da fertigungsbedingte Toleranzen besser überbrückt werden können.

Je nach Anforderungen an die Lagegenauigkeit kann auch eine Kalibrierung des in der Bohrung eingebrachten Klebers oder das Verwenden kalibrierter Stützringe sinnvoll sein.

In der Zeichnung sind Ausführungsbeispiele der Erfindung dargestellt. Es zeigen:
- Fig. 1: den Radialschnitt durch ein Kugellager zur Lagerung einer Welle,
- Fig. 2: die zu Fig. 1 korrespondierende Seitenansicht,
- Fig. 3: eine vergrößerte Darstellung des Kugellagers gemäß Fig. 1,
- Fig. 4: eine erste alternative Ausgestaltung des Kugellagers nach Fig. 3 und
- Fig. 5: eine zweite alternative Ausgestaltung des Kugellagers nach Fig. 3.

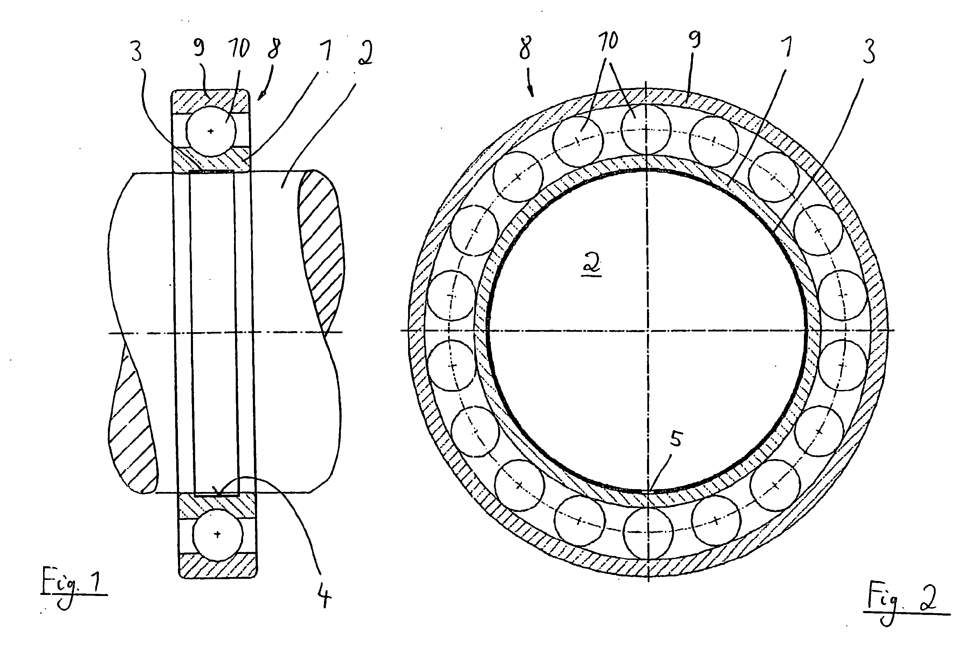

In den Figuren 1 bis 3 ist ein Kugellager 8 zu sehen, das aus einem Innenring 1 und einem Außenring 9 besteht, zwischen denen Wälzkörper in Form von Kugeln 10 angeordnet sind. Mit dem Lager 8 wird ein Bauteil 2 in Form einer Welle gelagert. Hierzu ist der Lagerinnenring 1 mit der Welle 2 verbunden. Nicht dargestellt ist die Festlegung des Lageraußenrings 9 in einem - nicht dargestellten - Gehäuse.

Damit es zu einem festen Verbund zwischen Lagerinnenring 1 und Welle 2 kommt, ist eine Klebeverbindung vorgesehen. Der zum Einsatz kommende Klebstoff 3 weist in dem Ausführungsbeispiel eine besondere Ausgestaltung auf. Zum Einsatz kommt nämlich ein Klebstoff, der bei typischen Umgebungstemperaturen (zwischen 0°C und 50 °C) eine feste Konsistenz hat (Details hierzu und Beispiele sind weiter unten angegeben). Aus diesem Klebstoff kann ein bei üblicher Umgebungstemperatur mechanisch stabiles Teil hergestellt werden.

Vorliegend ist der Klebstoff 3 als hohlzylindrisches Teil mit dünner Wandung gefertigt. An einer Umfangsstelle (s. hierzu Fig. 2) weist dieses hülsenförmige Teil einen Schlitz 5 auf.

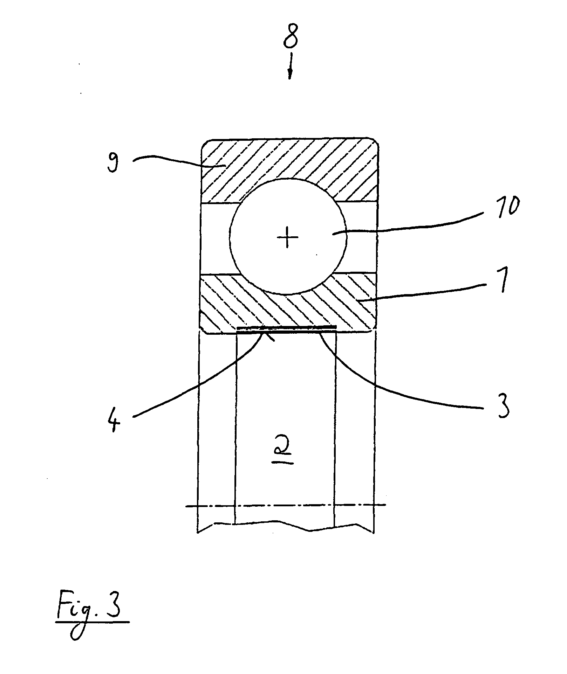

Der Lagerinnenring 1 hat indes an der der Welle 2 zugewandten Oberfläche eine ringnutförmige Eindrehung (s. am besten Fig. 3), deren Tiefe gleich groß oder etwas geringer ist als die Dicke des hohlzylindrischen Teils Klebstoff 3. Die Nut für das Klebstoffteil kann auch tiefer ausgebildet sein, was den Einsatz von Klebstoffen mit Volumenexpansion (Zusatz von Treibmitteln) begünstigt. Hierdurch können enge Spalte ausgefüllt werden.

Demgemäß ist es möglich, das hohlzylindrische Teil aus Klebstoff 3 in die Ausnehmung 4 einzuschieben. Infolge des Schlitzes 5 kann die Einbringung des Klebstoffs 3 in die Ausnehmung 4 nach Art einer Schnappverbindung erfolgen.

Der Klebstoff hat bei typischen Umgebungstemperaturen nicht nur eine feste Konsistenz, er weist auch keine adhäsive Eigenschaft auf. Demgemäß kann der Lagerring 1 und damit das gesamte Lager 8 nach der Montage des Klebstoffs 3 in die Ausnehmung 4 auf der Welle 2 problemlos in die benötigte Lage verschoben werden, in der die Teile 1 und 2 zu verbinden sind. Dies erfolgt auch, ohne dass es zu irgendeiner Verschmutzung von angrenzenden Bereichen mit Klebstoff kommt, da dieser noch keine adhäsive Wirkung hat.

Ist die gewünschte bzw. benötigte Relativposition zwischen dem Lagerring 1 und der Welle 2 erreicht, wird der Klebstoff 3 aktiviert, d. h. in einen Zustand versetzt, in dem er seine adhäsive Wirkung entfaltet. Die Folge ist die Herstellung einer permanenten Verbindung zwischen Lagerring 1 und Welle 2. Die adhäsive Wirkung wird dabei auch im benachbarten Bereich enger Passfugen bzw. Spalte entfaltet.

Die Aktivierung erfolgt in Abhängigkeit des gewählten Klebstoffs. Bei thermisch schmelzenden Klebstoffen (s. unten) kann die Aktivierung durch Wärmeeinwirkung erfolgen, insbesondere durch Induktion.

Alternativ kann auch eine Ultraschallbeschaufschlagung vorgesehen werden, um die adhäsive Eigenschaft des Klebstoffs 3 zu entfalten.

Eine weitere Alternative ist die Zugabe einer zweiten Komponente zu dem Klebstoff 3, so dass infolge der ausgelösten chemischen Reaktion der adhäsive Verbund zwischen den Teilen 1 und 2 hergestellt wird.

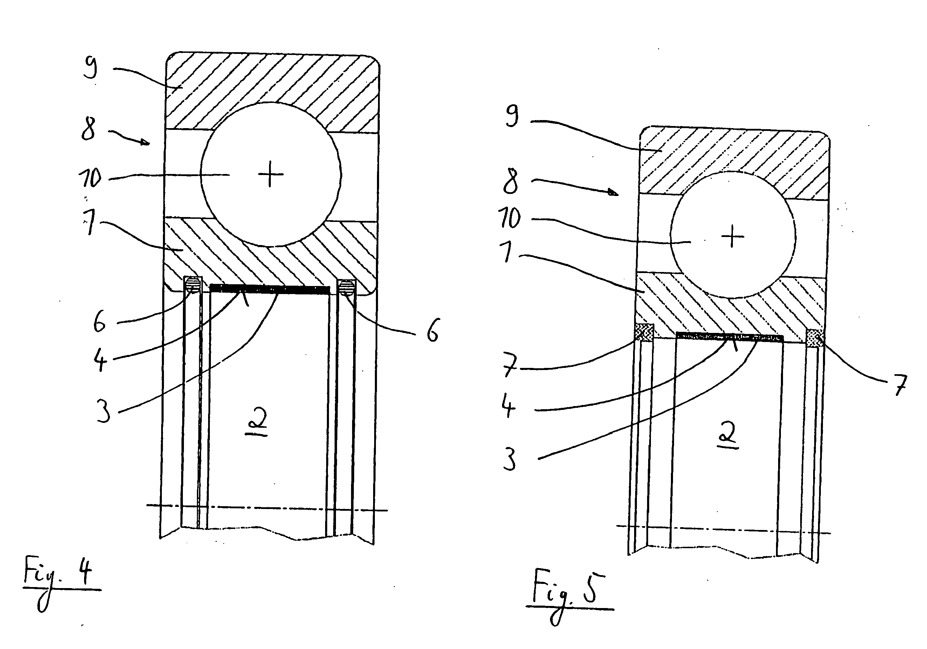

In den Figuren 4 und 5 sind Weiterbildungen der Lösung gemäß der Figuren 1 bis 3 zu sehen.

In Fig. 4 erfolgt ein Abdichten der Fügezone zwischen innerer Oberfläche des In nenrings 1 und äußerer Oberfläche der Welle 2 durch zwei Dichtungsringe 6 in Form von O-Ringen.

Bei der Lösung gemäß Fig. 5 kommen zwei Kalibrierringe 7 zum Einsatz, die eine entsprechende Stützfunktion haben.

Zu den einzusetzenden Klebstoffen sei folgendes angemerkt:
Es können zunächst Schmelzklebstoffe zum Einsatz kommen (auch als "Hotmelts" bezeichnet). Diese sind - was für die vorliegende Erfindung sehr vorteilhaft ist - bei Raumtemperatur fest. Sie werden durch Aufschmelzen verarbeitbar, d. h. sie entfalten bei Erwärmung ihre adhäsive Wirkung. Es erfolgt hier also eine Aktivierung durch Temperatur. Die heiße Klebstoffschmelze geht den adhäsiven Verbund ein. Unmittelbar nach dem Abkühlen und Erstarren des Klebstoffs ist die Verbindung fest. Dies ermöglicht in vorteilhafter Weise eine schnelle Montage.

Aus dem Schmelzklebstoff kann im festen Zustand in einfacher Weise eine Hülse gefertigt werden, die in eine Ausnehmung (Ausdrehung) beispielsweise im Sitz eines Lagerrings eingesetzt werden kann.

Zum Einsatz kommen können auch Kontaktklebstoffe.

Ferner können chemisch härtende Klebstoffe eingesetzt werden. Bei diesen auch als Reaktionsklebstoffe bezeichneten Klebstoffen werden die einzelnen chemischen Bausteine für den Klebstoff im richtigen Verhältnis in die Klebefuge eingebracht. Die Verfestigung erfolgt dann durch eine chemische Reaktion der Bausteine miteinander. Gemäß der Erfindung kommen bevorzugt, jedoch nicht ausschließlich, zwei-(oder mehr-) komponentige Systeme zum Einsatz. Bei diesen besteht der Klebstoff aus getrennten Bestandteilen, A- und B-Teil oder Binder (auch Harz genannt) und Härter genannt, die vor der Applikation im korrekten Verhältnis kontaktiert werden. Durch die Kontaktaufnahme startet die chemische Reaktion zwischen den zuvor separat vorliegenden Bausteinen zum Klebstoffpolymer.

In Frage kommen ferner anaerob härtende Klebstoffe. Diese Klebstoffe werden als einkomponentiges System eingesetzt. Die eingesetzten Monomere von (modifizierten) Acrylsäure-Estern härten nach einem Radikalketten-Mechanismus ähnlich den Methylmethacrylaten aus. Das Besondere dabei ist, dass die Härtereaktion nur unter Ausschluss von Sauerstoff, also anaerob, und in Anwesenheit von Metallionen startet, wenn der Klebstoff in einer engen metallischen Klebfuge von der Umgebungsluft abgeschlossen wird. Es können nur metallische Werkstoffe damit geklebt werden, was für die vorliegende Erfindung von Vorteil ist, da für die Aushärtung freie Metallionen als Reaktionspartner benötigt werden.

Weitere bevorzugte Klebstoffe, die vorteilhaft bei der vorliegenden Erfindung eingesetzt werden können, sind strahlenhärtende Klebstoffe. Bei diesen Klebstoffen, die als einkomponentige Systeme eingesetzt werden, härten durch radikalische Polymerisation zu festen Polymeren, wobei die Bildung der Startradikale durch Bestrahlung mit UV-Licht (oder anderen Strahlenquellen, wie z. B. Elektronen) hervorgerufen wird. Die Wellenlänge des UV-Lichts muss dabei genau auf das eingesetzte Klebstoffsystem abgestimmt sein. Die Aushärtung erfolgt durch Bestrahlen mit UV-Licht.

Es sind hierbei mehrere Varianten möglich:
Es können kationische Epoxies (Epoxidharze-Klebstoffe) zum Kleben von nicht transparenten Substraten eingesetzt werden, was vorliegend vorteilhaft ist. Im Unterschied zu den radikalisch härtenden Acrylatklebstoffen können die kationisch härtenden Klebstoffsysteme nach einer ausreichenden Aktivierung mit UV-Strahlung im Dunklen weiterhärten. Kationische Epoxies können für Anwendungen mit einem UV-durchlässigen Bauteil ebenso eingesetzt werden, wie für Anwendungen bei nicht UV-durchlässigen Werkstoffen. Bei Letzteren muss der Klebstoff nach dem Dosieren, jedoch vor dem Fügen mit UV-Strahlung aktiviert werden. Nach der Aktivierung besitzt der Klebstoff eine begrenzte offene Zeit, in der die Bauteile zu fügen sind.

Dual härtende Produkte mit mehr als einem Härtungsmechanismus hingegen sind geeignet für Anwendungen mit echten Schattenbereichen, die keiner Strahlungsquelle zugänglich sind. Die Aushärtung im Schattenbereich erfolgt entweder unter Luftabschluss in Gegenwart von Metallen, durch Luftfeuchtigkeit oder durch Wärmezufuhr.

Bei den Phenol-Formaldehydharz-Klebstoffen sind die Basis-Bausteine Phenol (oder Phenol-Derivate) und Formaldehyd, die zu einem Polymer kondensiert werden. In der Klebetechnik setzt man eine Mischung aus Phenol-Formaldehyd-Harz, das noch nicht hochmolekular polymerisiert ist, und einem Formaldehyd-Lieferanten ein. Dieses Gemisch bringt man als Lösung oder auch als Pulver in die Klebefuge ein und setzt die quasi unterbrochene Kondensationsreaktion durch Temperaturerhöhung auf ca. 160 bis 180 °C fort. Der resultierende Klebstoff hat eine gute Temperaturbeständigkeit, weshalb man dieses System besonders für temperaturbelastete Metall-Verklebungen nutzen kann.

### Bezugszeichenliste

- 1: Lagerring (Innenring)
- 2: Bauteil (Welle, Gehäuse)
- 3: Klebstoff
- 4: Ausnehmung
- 5: Schlitz
- 6, 7: Barriereelement
- 6: Dichtungsring (O-Ring)
- 7: Kalibrierring
- 8: Lager (Wälzlager, Kugellager)
- 9: Lagerring (Außenring)
- 10: Wälzkörper (Kugel)

## Patentansprüche

1. Verfahren zum Festlegen eines Lagerrings (1) an oder in einem Bauteil (2) mittels einer Klebeverbindung, **dadurch gekennzeichnet, dass** das Verfahren die Schritte aufweist:
a) Einbringen des Klebstoffs (3) an oder in den Lagerring (1) oder an oder in das Bauteil (2), wobei der Klebstoff (3) noch keine adhäsive Eigenschaft aufweist, durch die Teilschritte:
a') Einbringen einer ringförmigen Ausnehmung (4) in den Lagerring (1) oder in das Bauteil (2);
a") Einsetzen eines aus Klebstoff (3) bestehenden Festkörpers in die Ausnehmung (4), wobei der aus Klebstoff (3) bestehende Festkörper eine hohlzylindrische Gestalt aufweist, die an einer Umfangsstelle einen Schlitz (5) aufweist, vorzugsweise einen in axiale Richtung des hohlzylindrischen Körpers verlaufenden Schlitz (5), wobei das Einsetzen des Klebstoffs (3) in die Ausnehmung (4) nach Art einer Schnappverbindung erfolgt;
b) Fügen des Lagerrings (1) und des Bauteils (2) in die gewünschte Relativposition;
c) Aktivieren des Klebstoffs (3) derart, dass er einen adhäsiven Verbund zwischen dem Lagerring (1) und dem Bauteil (2) eingeht.

2. Verfahren nach Anspruch 1, **dadurch gekennzeichnet, dass** die Aktivierung des Klebstoffs (3) gemäß Schritt c) von Anspruch 1 durch Erwärmung erfolgt.

3. Verfahren nach Anspruch 2, **dadurch gekennzeichnet, dass** die Erwärmung durch Induktion erfolgt.

4. Verfahren nach Anspruch 1, **dadurch gekennzeichnet, dass** die Aktivierung des Klebstoffs (3) gemäß Schritt c) von Anspruch 1 durch Beaufschlagung mit Ultraschall erfolgt.

5. Verfahren nach Anspruch 1, **dadurch gekennzeichnet, dass** die Aktivierung des Klebstoffs (3) gemäß Schritt c) von Anspruch 1 durch Zuführung einer zweiten Kleberkomponente erfolgt, die mit dem Klebstoff (3) reagiert.

6. Verfahren nach einem der Ansprüche 1 bis 5, **dadurch gekennzeichnet, dass** der Fluss des Klebstoffs (3) nach seiner Aktivierung in axiale Richtung zwischen Lagerring (1) und Bauteil (2) durch Verwendung mindestens eines Barriereelements (6, 7) begrenzt wird.

7. Verfahren nach Anspruch 6, **dadurch gekennzeichnet, dass** als Barriereelement (6, 7) mindestens ein Dichtungsring (6) verwendet wird.

8. Verfahren nach Anspruch 7, **dadurch gekennzeichnet, dass** als Dichtungsring (6) ein O-Ring verwendet wird.

9. Verfahren nach Anspruch 6, **dadurch gekennzeichnet, dass** als Barriereelement (6, 7) mindestens ein Kalibrierring (7) verwendet wird.

10. Verfahren nach einem der Ansprüche 6 bis 9, **dadurch gekennzeichnet, dass** das Barriereelement (6, 7) in einer Ringnut im Lagerring (1) oder im Bauteil (2) angeordnet wird.

11. Verfahren nach einem der Ansprüche 1 bis 10, **dadurch gekennzeichnet, dass** als Lagerring (1) der Innenring eines Wälzlagers und als Bauteil (2) eine Welle verwendet wird.

12. Verfahren nach einem der Ansprüche 1 bis 10, **dadurch gekennzeichnet, dass** als Lagerring (1) der Außenring eines Wälzlagers und als Bauteil (2) ein Gehäuse verwendet wird.

## Claims

1. Method for fixing a bearing ring (1) on or in a component (2) by means of an adhesive joint, **characterized in that** the method has the steps:
a) introduction of the adhesive (3) onto or into the bearing ring (1) or onto or into the component (2), the adhesive (3) not yet having any adhesive property; by the part-steps:
a') introduction of an annular recess (4) into the bearing ring (1) or into the component (2) ;
a") insertion of a solid body consisting of adhesive (3) into the recess (4) the solid body consisting of adhesive (3) having a hollow-cylindrical configuration, which has a slot (5) at a circumferential location, preferably a slot (5) running in the axial direction of the hollow-cylindrical body, the insertion of the adhesive (3) into the recess (4) taking place in the manner of a snap connection;
b) joining of the bearing ring (1) and of the component (2) into the desired relative position;
c) activation of the adhesive (3) in such a way that it makes an adhesive bond between the bearing ring (1) and the component (2).

2. Method according to one of Claim 1, **characterized in that** the activation of the adhesive (3) according to step c) of Claim 1 takes place by heating.

3. Method according to Claim 2, **characterized in that** heating takes place by induction.

4. Method according to one of Claim 1, **characterized in that** the activation of the adhesive (3) according to step c) of Claim 1 takes place by the action of ultrasound.

5. Method according to Claim 1, **characterized in that** the activation of the adhesive (3) according to step c) of Claim 1 takes place by the supply of a second adhesive component which reacts with the adhesive (3).

6. Method according to one of Claims 1 to 5, **characterized in that** the flow of the adhesive (3) after its activation in the axial direction between the bearing ring (1) and component (2) is limited by the use of at least one barrier element (6, 7).

7. Method according to Claim 6, **characterized in that** the barrier element (6, 7) used is at least one sealing ring (6).

8. Method according to Claim 7, **characterized in that** an O-ring is used as a sealing ring (6).

9. Method according to Claim 6, **characterized in that** the barrier element (6, 7) used is at least one calibrating ring (7).

10. Method according to one of Claims 6 to 9, **characterized in that** the barrier element (6, 7) is arranged in an annular groove in the bearing ring (1) or in the component (2).

11. Method according to one of Claims 1 to 10, **characterized in that** the inner ring of a rolling bearing is used as a bearing ring (1) and a shaft is used as a component (2).

12. Method according to one of Claims 1 to 10, **characterized in that** the outer ring of a rolling bearing is used as a bearing ring (1) and a housing is used as a component (2).

## Revendications

1. Procédé de fixation d'une bague de palier (1) sur ou dans un composant (2) au moyen d'une liaison collée, **caractérisé en ce que** le procédé présente les étapes qui consistent à :
a) apporter l'adhésif (3) sur ou dans la bague de palier (1) ou sur ou dans le composant (2) pendant que l'adhésif (3) ne présente pas encore de propriétés adhésives et en suivant les étapes partielles qui consistent à :
a') ménager une découpe annulaire (4) dans la bague de palier (1) ou dans le composant (2),
a") insérer un corps solide constitué de l'adhésif (3) dans la découpe (4), le corps solide constitué de l'adhésif (3) ayant la forme d'un cylindre creux qui présente en un emplacement de sa périphérie une fente (5), de préférence une fente (5) qui s'étend dans la direction axiale du corps cylindrique creux, l'insertion de l'adhésif (3) dans la découpe (4) s'effectuant par encliquetage,
b) assembler la bague de palier (1) avec le composant (2) dans leurs positions relatives souhaitées,
c) activer l'adhésif (3) de manière à établir une liaison par adhérence entre la bague de palier (1) et le composant (2).

2. Procédé selon la revendication 1, **caractérisé en ce que** l'activation de l'adhésif (3) de l'étape c) de la revendication 1 s'effectue par chauffage.

3. Procédé selon la revendication 2, **caractérisé en ce que** le chauffage s'effectue par induction.

4. Procédé selon la revendication 1, **caractérisé en ce que** l'activation de l'adhésif (3) de l'étape c) de la revendication 1 s'effectue en y appliquant des ultrasons.

5. Procédé selon la revendication 1, **caractérisé en ce que** l'activation de l'adhésif (3) de l'étape c) de la revendication 1 s'effectue par apport d'un deuxième composant adhésif qui réagit avec l'adhésif (3).

6. Procédé selon l'une des revendications 1 à 5, **caractérisé en ce qu'**après l'activation de l'adhésif (3), son écoulement dans la direction axiale entre la bague de palier (1) et le composant (2) est limité par recours à au moins un élément de barrière (6, 7).

7. Procédé selon la revendication 6, **caractérisé en ce qu'**il utilise comme élément de barrière (6, 7) au moins une bague d'étanchéité (6).

8. Procédé selon la revendication 7, **caractérisé en ce qu'**il utilise comme bague d'étanchéité (6) un joint torique.

9. Procédé selon la revendication 6, **caractérisé en ce qu'**il utilise comme élément de barrière (6, 7) au moins une bague d'étalonnage (7).

10. Procédé selon l'une des revendications 6 à 9, **caractérisé en ce que** l'élément de barrière (6, 7) est disposé dans une rainure annulaire ménagée dans la bague de palier (1) ou dans le composant (2).

11. Procédé selon l'une des revendications 1 à 10, **caractérisé en ce qu'**il utilise comme bague de palier (1) la bague intérieure d'un palier de roulement et comme composant (2) un arbre.

12. Procédé selon l'une des revendications 1 à 10, **caractérisé en ce qu'**il utilise comme bague de palier (1) la bague extérieure d'un palier de roulement et comme composant (2) un boîtier.
